# FASCICULE DE BREVET EUROPEEN

(11) **EP 0 332 506 B1**
(45) Date de publication et mention de la délivrance du brevet: **12.05.1993**
(21) Numéro de dépôt: 89400579.2
(22) Date de dépôt: 02.03.1989
(51) Int. Cl.: B25J 9/06, B25J 9/08, B25J 9/14, B25J 17/02, B25J 19/00

(54) **Bras modulaire de manipulation**
Modularer Manipulator-Arm
Modular manipulator arm

(30) Priorité: 07.03.1988 FR 8802860
(43) Date de publication de la demande: 13.09.1989
(73) Titulaire: Gabillet, Maurice, F-92100 Boulogne Billancourt (FR)
(72) Inventeur: Gabillet, Maurice, F-92100 Boulogne Billancourt (FR)
(74) Mandataire: Colas, Jean-Pierre

(56) Documents cités:
- EP-A- 0 153 884
- FR-A- 2 101 097
- FR-A- 2 150 635
- GB-A- 2 126 559
- US-A- 4 552 504
- US-A- 4 561 816
- US-A- 4 641 251
- US-A- 4 683 406

## Description

La présente invention est relative à un bras modulaire de manipulation.

L'inventeur a décrit, dans le document EP-A-0153884 un bras de manipulation comprenant une série d'éléments articulés, un premier et un second élément successifs de la série ayant chacun un axe et étant reliés l'un à l'autre par un moyen d'accouplement qui permet le pivotement du premier élément autour d'un axe de pivotement qui rencontre l'axe du premier élément et qui rencontre obliquement l'axe du second élément au même point.

Lesdits premier et second éléments ayant chacun un tronçon rigide d'arbre d'entraînement, intérieur et coaxial à l'élément correspondant, ces tronçons étant reliés entre eux par une liaison articulée et reliés chacun à l'élément correspondant par des moyens de liaison qui permettent de faire tourner à volonté et d'immobiliser à volonté un tronçon par rapport à l'élément correspondant.

Selon ce document, le moyen moteur peut être constitué soit d'un dispositif à manivelle, commun à tous les éléments du bras de manipulation, qui commande la rotation de l'arbre d'entraînement articulé constitué des tronçons d'arbre successifs, reliés en série les uns aux autres, ces tronçons étant pourvus chacun d'un embrayage pour obtenir à volonté la rotation relative de l'élément par rapport à l'arbre soit d'un moteur pourvu d'engrenages et associé à chaque élément.

Il est apparu que, dans les deux cas, l'obtention de forces importantes pour le bras de manipulation aboutissait à une augmentation appréciable du poids et des dimensions de l'appareillage.

Pour améliorer les performances de son dispositif antérieur, l'inventeur a pensé à mettre à profit les propriétés des vérins rotatifs.

Le vérin rotatif est un appareil connu depuis longtemps. Il comprend une enceinte délimitée par une paroi cylindrique externe et une paroi cylindrique interne, coaxiale à la première et par deux parois perpendiculaires à l'axe. Cette enceinte est divisée en deux chambres par deux cloisons axiales, l'une solidaire de la paroi externe et l'autre de la paroi interne, et le pivotement relatif de ces cloisons fait varier le volume des chambres.

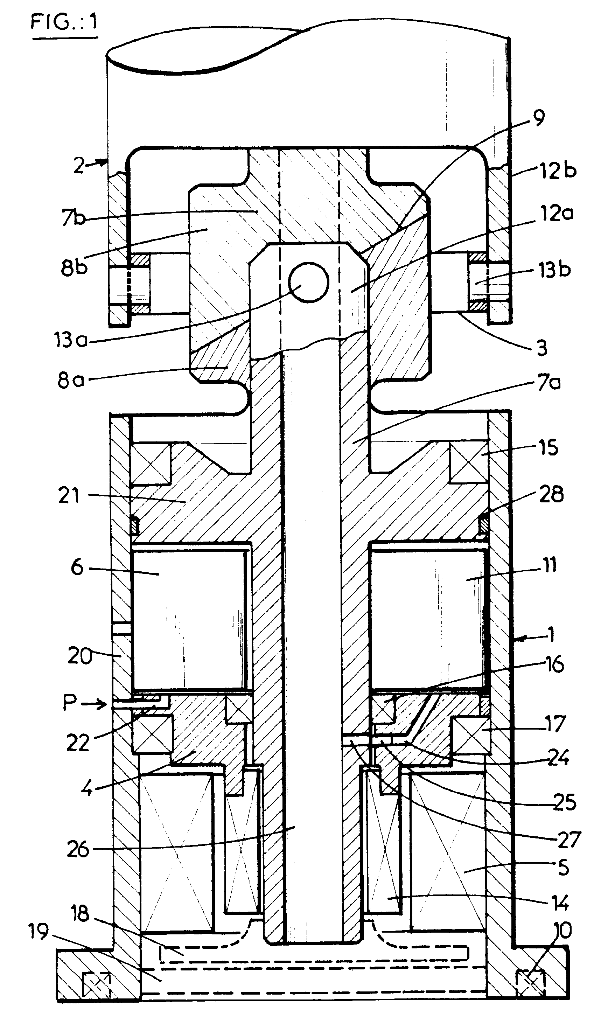

FR-A-2.101.097 prévoit un ensemble d'actionnement composé d'un vérin rotatif et d'un distributeur, logé à l'intérieur de l'élément (page 7, lignes 32-35). Attendu que le distributeur est en périphérie du vérin rotatif, la section de l'ensemble vérin-distributeur n'est pas circulaire, mais a une forme compliquée, voir figures 1 à 4. Il en résulte que cet ensemble n'occupe qu'une petite part du volume intérieur de chaque élément. Les articulations 39, 41 et 44 de la figure 5 sont à axe perpendiculaire à l'axe des éléments et il paraît clair que les vérins rotatifs de ces articulations ont leur axe aussi perpendiculaire à celui des éléments.

L'espace intérieur des éléments est donc très mal utilisé. Les éléments, pour une puissance donnée des moyens moteurs, doivent donc être volumineux, donc lourds.

Le but de l'invention est de fournir un bras de manipulation du type indiqué au début et qui soit capable de fournir des efforts importants par comparaison à son poids et son encombrement tout en étant de construction simple et peu coûteuse.

Ce résultat est obtenu en prévoyant que l'élément est constitué au moins en partie comme un corps creux, et en ce que lesdits moyens d'actionnement comprennent un vérin rotatif dont l'une des parois cylindriques est constituée par la face interne de l'élément, l'autre paroi cylindrique du vérin étant constituée par la face externe du tronçon d'arbre, ainsi qu'un distributeur apte à relier une chambre du vérin rotatif à une source de fluide sous pression ou à un moyen de décharge de pression et à isoler ladite chambre.

Selon l'invention, le fait d'utiliser la paroi de l'élément comme paroi du vérin rotatif assure une utilisation optimale de l'espace.

De préférence, le distributeur est logé à l'intérieur de l'élément.

On obtient ainsi une construction simple et peu encombrante.

Selon une réalisation préférée, le distributeur est un distributeur rotatif adjacent à une des parois perpendiculaires à l'axe du vérin, et commandé par un moteur de faible puissance, qui peut être un moteur électrique par exemple du type "pas-à-pas".

Dans cette réalisation, le vérin rotatif constitue un amplificateur électrohydraulique de puissance.

Avantageusement, les tronçons d'arbre des éléments sont creux et servent à la liaison des vérins avec la source de pression et/ou un moyen de décharge de pression.

On notera que la rotation d'un vérin rotatif n'étant que d'un peu moins de 360° au maximum, les joints peuvent être simplifiés ou même remplacés par des tuyaux souples pour le passage d'un tronçon d'arbre à un autre.

De préférence, l'élément est pourvu en outre d'un frein mécanique, par exemple à disque, qui assure l'immobilisation relative du tronçon d'arbre et de l'élément, lorsque la position convenable est atteinte. Avantageusement, ce frein mécanique assure également l'immobilisation en cas de chute de la pression de fluide et/ou de la tension électrique d'alimentation du moteur.

Ce frein permet de se dispenser d'avoir des joints de grande étanchéité pour le vérin rotatif, car celui-ci n'est actif que pendant la courte durée des déplacements. Le frein mécanique permet ainsi d'économiser l'énergie lorsque la position est stable pendant un certain temps, en interrompant la fourniture de pression et d'électricité. Enfin, il permet d'assurer la sécurité en cas d'avarie aux réseaux fluidiques ou électriques.

Dans ce qui précède, on n'a pas précisé la nature du fluide alimentant le vérin. On peut utiliser un vérin hydraulique, qui permet de fortes puissances ou un vérin pneumatique qui permet de simplifier le dispositif en supprimant les conduits de retour.

L'allègement procuré par la structure qu'on vient de décrire a permis d'utiliser des accouplements entre éléments de construction plus simple ce qui, en retour, procure de nouveaux allègements. Selon une modalité préférée, le moyen d'accouplement entre le premier élément 1 et le second élément 2 et la liaison articulée entre les tronçons d'arbre d'entraînement correspondant à ces éléments sont constitués, dans leur ensemble, par une liaison à la cardan ou analogue 3, 13a, 13b, qui permet à chaque élément de prendre une orientation quelconque par rapport à l'autre, mais ne permet pas à un élément de tourner sur son axe propre quand l'autre élément est immobilisé, et par une liaison à pivot, reliant les deux tronçons d'arbre d'entraînement l'un à l'autre, cette liaison ayant un axe de pivotement unique, lequel rencontre obliquement les axes des deux tronçons.

Avantageusement, la liaison à pivot est réalisée par deux platines 8a, 8b portées chacune par deux tronçons 7, en contact par une surface 9 oblique par rapport à l'axe de ce tronçon, ces deux platines étant maintenues en appui l'une sur l'autre par le fait que les deux tronçons sont immobilisés axialement par rapport chacun à l'élément correspondant et que les éléments sont immobilisés axialement l'un par rapport à l'autre par ladite liaison à la cardan.

Comme on peut le voir, cette disposition est inversée par rapport à celle qui est décrite dans EP-A-0153884. Ce document montre en effet les éléments accouplés l'un sur l'autre dans des plans obliques par rapport à leur axe et les tronçons d'arbre reliés par des joints universels (ou à la cardan). La nouvelle disposition permet de supprimer ces roulements de grand diamètre donc lourds en les remplaçant par un joint à la cardan plus léger, au niveau de l'accouplement entre éléments, alors que pour la liaison des tronçons entre eux, le joint universel peut être remplacé par de simples surfaces d'appui dont le poids est analogue.

L'invention va maintenant être décrite de façon plus détaillée à l'aide d'exemples pratiques illustrés avec les dessins parmi lesquels:
- la figure 1 est une coupe axiale d'un élément et d'une partie d'élément adjacent;
- la figure 2 présente une coupe perpendiculaire à l'axe du vérin rotatif;
- la figure 3 présente une coupe perpendiculaire à l'axe de moyens d'accouplement des éléments;
- la figure 4 est une représentation du manipulateur où les éléments successifs peuvent s'enrouler en spirale;
- la figure 5 présente le montage en séries parallèles sur une embase commune de plusieurs couples d'éléments de façon à constituer une main de préhension.

On se réfère d'abord à la figure 1.

Deux corps cylindriques creux 1, 2, portent chacun à une de leurs extrémités deux attaches symétriques 12a, 12b; ces deux couples d'attaches sont reliées entre elles par un anneau 3 constituant un élément de liaison entre les deux éléments cylindriques; chaque attache est reliée à l'anneau par deux pivots 13a, 13b, si bien qu'on a un joint de cardan autorisant un mouvement de pivotement d'un des corps cylindriques par rapport à l'autre.

Considérons maintenant l'intérieur de chacun des corps cylindriques creux. Un arbre 7a, 7b, faisant partie intégrante d'un vérin rotatif qui constitue un amplificateur à palettes 6, est monté sans jeu suivant l'axe des corps creux cylindriques par l'intermédiaire de roulements 15, 16, 17. De plus chaque arbre porte à une de ses extrémités une platine 8a, 8b dont les faces 9 en contact sont inclinées d'un angle de 30°, cette valeur n'étant pas obligatoire, sur l'axe de l'arbre et, à l'autre extrémité, l'armature 18 d'un frein à disque constitué de cette armature et d'un corps inducteur 19 fixé rigidement sur le corps cylindrique creux.

Maintenons fixe un des corps cylindriques tout en laissant l'autre libre; la rotation d'un des arbres 7a, 7b, provoquera le pivotement d'un certain angle du corps cylindrique libre, l'axe de ce corps décrivant un cône ayant pour sommet le point de concours des avis de l'élément de liaison 3; en effet les plans des faces des platines montés sur les arbres passent par ce point de concours. De plus, le mouvement de rotation combiné des deux arbres suivant une logique définie permettra d'orienter l'axe du cylindre mobile en grandeur et direction par rapport à l'axe du cylindre fixe, l'angle maximum étant déterminé à la fois par l'épure du joint de cardan et l'inclinaison de la face 9.

Si, lorsque l'on atteint la position angulaire désirée, on bloque en position les deux arbres au moyen des freins à disque, on obtient une articulation rigide ayant entre ses deux axes un angle défini dans une direction donnée.

Si par contre l'armature de frein de l'élément 1 est fixée rigidement à l'élément précédent, les deux éléments étant reliés par l'intermédiaire d'un roulement 10, on aura un mouvement de rotation de l'élément 1 suivant son axe par rapport à l'élément précédent.

Considérons maintenant le dispositif de commande en rotation de ces arbres 7a, 7b. Le couple nécessaire à la rotation de l'arbre est assuré par un vérin rotatif (ou par un moteur hydraulique) constitué comme suit: le volume de travail est limité d'une part par la surface intérieure 20 du cylindre creux, d'autre part par l'arbre 7 et le flasque 21 qui en est solidaire, enfin par un distributeur rotatif hydraulique 4 qui assure, suivant sa position angulaire, l'alimentation en fluide sous pression de l'une ou l'autre des chambres annulaires, ces chambres étant elles-mêmes limitées d'une part par une palette rectangulaire fixe 6 liée au corps cylindrique, et d'autre part par une palette rectangulaire mobile 11 liée à l'arbre.

L'arrivée du fluide sous pression s'effectue par un conduit 22 percé dans l'enveloppe cylindrique de la palette et le distributeur; le retour à la bâche par un conduit 24 percé dans l'épaisseur du distributeur rotatif, une rainure 25 réalisée sur l'alésage intérieur de ce distributeur, enfin par le perçage de l'arbre 7 par deux trous l'un 26 suivant l'axe de l'arbre, l'autre 27 suivant un rayon de cet arbre. A toute position angulaire du distributeur correspondra une position angulaire de l'arbre 7 et une seule.

La commande en rotation du distributeur 4 est réalisé par le rotor 14 d'un moteur pas-à-pas qui lui est directement accouplé, le stator 5 de ce même moteur venant s'emboîter à l'intérieur de l'élément cylindrique. Si l'on commande la rotation d'un angle donné dans un sens donné du meilleur pas-à-pas, le distributeur effectuera le même angle et l'arbre du vérin hydraulique également.

La figure 1 présente un module articulé dont le moyen de commande en rotation de l'arbre 7a, 7b, est constitué d'un dispositif électrohydraulique asservi en position; bien entendu tout autre actionneur rotatif disposant à la fois de la puissance massique et de la précision de position suffisantes pour l'application étudiée pourra également être utilisé; par exemple on peut aussi concevoir d'utiliser un vérin pneumatique, ce qui offre l'avantage d'une plus grande simplicité par la suppression des conduits de retour au réservoir.

On notera sur cette même figure que l'étanchéité des chambres du moteur hydraulique à palettes est assurée par des tolérances de montage serré et des matériaux à faible coefficient de frottement. En cas de pression élevée on peut utilement améliorer cette étanchéité par la mise en place de joints ou mieux de segments d'étanchéité 28.

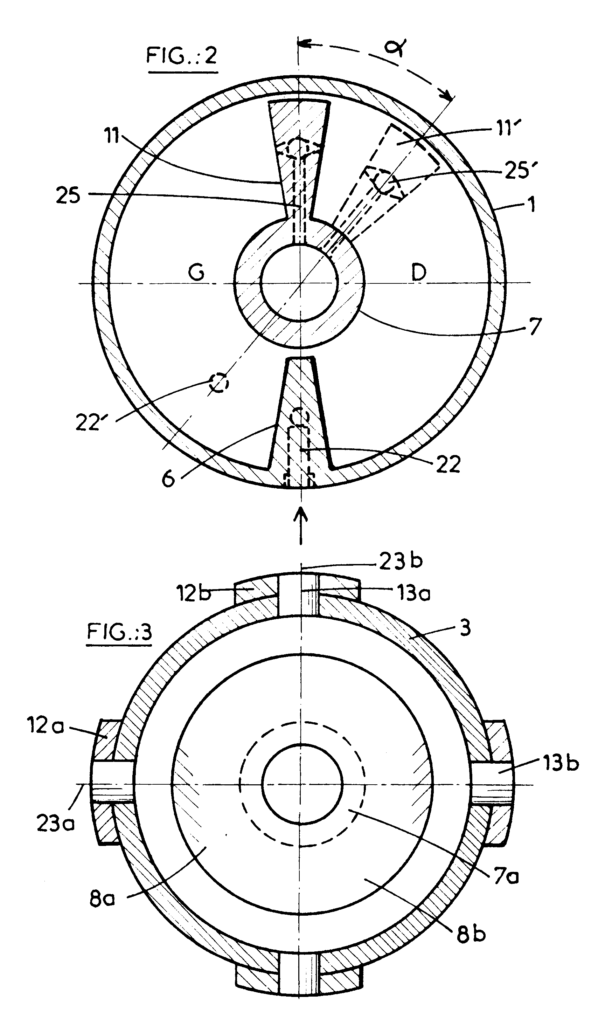

On se réfère maintenant à la figure 2. On retrouve sur cette figure en coupe transversale le corps cylindrique 1, l'arbre creux 7, la palette fixe 6 et la palette mobile 11. Les deux palettes limitent deux chambres annulaires, l'une à gauche G, l'autre à droite D. Le conduit de pression 22 est obturé par la palette fixe, le conduit de retour à la bâche 25 par la palette mobile. Si l'on fait tourner le distributeur hydraulique d'un angle α, le conduit de pression passe en 22' et le conduit de retour bâche en 25'. La différence de pression entre les chambres G et D provoque la rotation de l'arbre portant la palette mobile jusqu'à obturation du retour bâche 25', c'est-à-dire en position 11'.

On se réfère maintenant plus précisément à la figure 3. Cette coupe suivant le plan principal de l'élément de liaison montre l'anneau 3 qui relie par l'intermédiaire de pivots 13 les attaches 12a du corps cylindrique 1 aux attaches 12b du corps cylindrique 2. On aperçoit également, partiellement coupées, les platines d'extrémité 8a et 8b des arbres 7a et 7b. Une rotation de l'un et/ou l'autre de ces arbres provoque la rotation de l'un des corps par rapport à l'autre suivant deux axes orthogonaux 23a et/ou 23b.

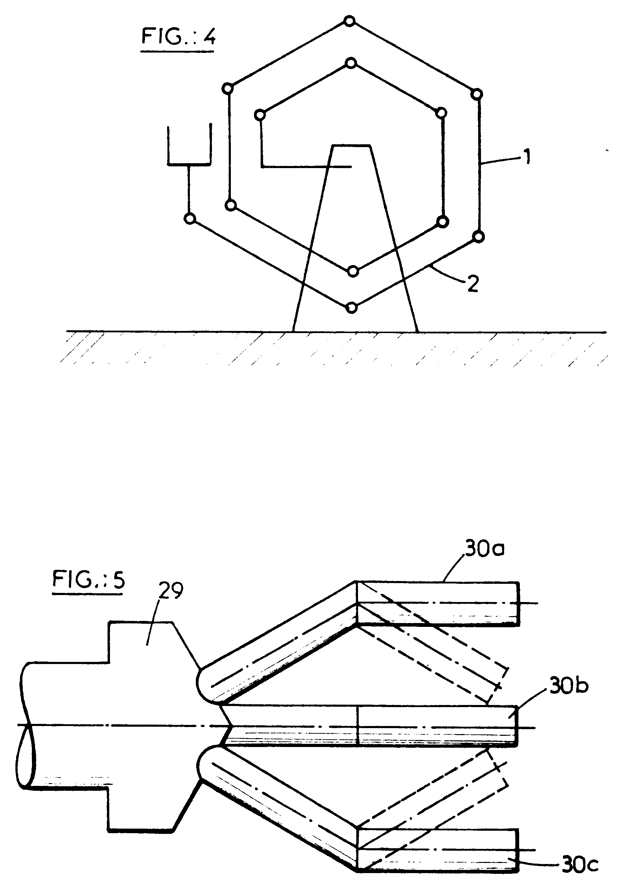

On se réfère maintenant à la figure 4. Elle représente un bras de manipulation dans une disposition analogue à celle qui est décrite dans le brevet EP-A-0 153 884 mais, dans ce bras, les longueurs des éléments des modules successifs 1, 2, vont en croissant ce qui autorise un enroulement en spirale d'où une possibilité d'extension du bras importante, plus particulièrement verticalement.

On se réfère maintenant à la figure 5. Elle présente une autre possibilité de configuration d'un bras de manipulation. Les éléments sont montés les uns en série, les autres en parallèle sur une embase 29 dont la surface de fixation serait par exemple un cône de sommet 120°, l'ensemble constitue une main de préhension, l'action de préhension des éléments d'extrémité 30a, 30b, 30c, pouvant être ou non indépendants les uns des autres. L'embase 29 peut être fixe ou bien constituer elle-même un des éléments du bras de manipulation.

## Revendications

1. Bras de manipulation comprenant une série d'éléments articulés, un premier et un second élément (1, 2) successifs de la série ayant un axe et étant reliés l'un à l'autre par un moyen d'accouplement qui permet le pivotement du premier élément autour d'un axe de pivotement qui rencontre l'axe de premier élément et qui rencontre obliquement l'axe du second élément en un même point, lesdits premier et second éléments ayant chacun un tronçon rigide (7a, 7b) d'arbre d'entraînement, intérieur et coaxial à l'élément correspondant, ces tronçons étant reliés entre eux par une liaison articulée (13a) et reliés chacun à l'élément correspondant par des moyens d'actionnement, qui permettent de faire tourner à volonté et d'immobiliser à volonté un tronçon par rapport à l'élément correspondant, caractérisé en ce que l'élément (1, 2) est constitué au moins en partie comme un corps creux, et en ce que lesdits moyens d'actionnement comprennent un vérin rotatif (6) dont l'une des parois cylindriques est constituée par la face interne de l'élément, l'autre paroi cylindrique du vérin étant constituée par la face externe du tronçon d'arbre, ainsi qu'un distributeur (4) apte à relier une chambre du vérin rotatif à une source de fluide sous pression ou à un moyen de décharge de pression et à isoler ladite chambre.

2. Bras selon la revendication 1, caractérisé en ce que le distributeur (4) est logé à l'intérieur de l'élément (1, 2).

3. Bras selon la revendication 1 ou 2, caractérisé en ce que le distributeur (4) est un distributeur rotatif adjacent à une des parois perpendiculaires à l'axe du vérin et commandé par un moteur de faible puissance (5) qui peut être un moteur électrique par exemple du type pas-à-pas.

4. Bras selon l'une des revendications 1 à 3, caractérisé en ce que les tronçons d'arbre (7a, 7b) des éléments sont creux et servent à la liaison des vérins (6) avec la source de pression et/ou un moyen de décharge de pression.

5. Bras selon l'une des revendications 1 à 4, caractérisé en ce que l'élément est pourvu en outre d'un frein mécanique (19) par exemple à disque qui assure l'immobilisation relative du tronçon d'arbre (7a) et de l'élément (1) lorsque la position convenable est atteinte.

6. Bras selon la revendication 5, caractérisé en ce que le frein mécanique assure également l'immobilisation relative de l'élément et du tronçon d'arbre en cas de chute de pression du fluide et de la tension électrique du moteur.

7. Bras selon l'une des revendications 1 à 6, caractérisé en ce que le moyen d'accouplement entre le premier élément (1) et le second élément (2) et la liaison articulée entre les tronçons d'arbre d'entraînement correspondant à ces éléments sont constitués, dans leur ensemble, par une liaison à la cardan ou analogue (3, 13a, 13b) ce qui permet à chaque élément de prendre une orientation quelconque par rapport à l'autre, mais ne permet pas à un élément de tourner sur son axe propre quand l'autre élément est immobilisé, et par une liaison à pivot, reliant les deux tronçons d'arbre d'entraînement l'un à l'autre, cette liaison ayant un axe de pivotement unique, lequel rencontre obliquement les axes des deux tronçons.

8. Bras selon la revendication 7, caractérisé en ce que la liaison à pivot est réalisée par deux platines (8a, 8b) portées chacune par un tronçon (7), en contact par une surface (9) oblique par rapport à l'axe de ce tronçon, ces deux platines étant maintenues en appui l'une sur l'autre par le fait que les deux tronçons sont immobilisés axialement par rapport chacun à l'élément correspondant et que les éléments sont immobilisés axialement l'un par rapport à l'autre par ladite liaison à la cardan.

9. Bras selon l'une des revendications 1 à 8, caractérisé en ce que au moins certains des éléments de liaison sont de longueur croissante dans la série.

10. Bras selon l'une des revendications 1 à 9, caractérisé en ce que des éléments sont montés en séries parallèles sur une embase (29) de façon à constituer par exemple une main de préhension.

## Claims

1. A manipulation arm comprising a series of articulated elements, a successive first and second element (1, 2) of the series having one axis and being linked to one another by a coupling means allowing the first element to pivot about a pivot axis which meets the axis of the first element and which meets the axis of the second element obliquely at the same point, said first and second elements each having a rigid drive-shaft portion (7a, 7b) within and coaxial relative to the corresponding element, these portions being linked to one another by means of an articulated connection (13a) and each being linked to the corresponding element by connection means which make it possible to rotate a portion at will and immobilize it at will in relation to the corresponding element, characterized in that the element (1, 2) is formed, at least partially, as a hollow body, and in that the said connection means comprise a rotary jack (6), of which one cylindrical wall is formed by the inner face of the element, the other cylindrical wall of the jack being formed by the outer face of the shaft portion, and a distributor (4) capable of connecting a chamber of the rotary jack to a source of pressurized fluid or to a pressure discharge means and of isolating the said chamber.

2. The arm as claimed in claim 1, characterized in that the distributor (4) is placed inside the element (1, 2).

3. The arm as claimed in claim 1 or 2, wherein the distributor (4) is a rotary distributor adjacent to one of the walls perpendicular to the axis of the jack and controlled by a low-power motor, such as an electric motor, for example of the stepping type.

4. The arm as claimed in anyone of claims 1 to 3, wherein the shaft portions (7a, 7b) of the elements are hollow and serve for connecting the jacks (6) to the pressure source and/or to a pressure discharge means.

5. The arm as claimed in claim 1, wherein the element is also equipped with a mechanical brake (19), or example of the disk type, which ensures the relative immobilization of the shaft portion (7a) and the element (1) when the appropriate position is reached.

6. The arm as claimed in claim 5, wherein the mechanical brake also ensures the relative immobilization of the element and the shaft portion in the event of a fall of fluid pressure or of the electrical voltage of the motor.

7. The arm as claimed in anyone of claims 1 to 6, wherein the coupling means between the first element (1) and the second element (2) and the articulated connection between the drive-shaft portions corresponding to these elements are composed, as a whole, of a connection (3, 13a, 13b) of the cardan type or the like, which allows each element to assume any orientation relative to the other, but does not allow one element to rotate on its own axis when the other element is immobilized, and of a pivot-type connection linking the two drive-shaft portions to one another, this connection having a single pivot axis which meets the axes of the two portions obliquely.

8. The arm as claimed in claim 7, wherein the pivot-type connection is obtained by means of two plates (8a, 8b) each carried by a portion (7) and in contact by means of a surface oblique relative to the axis of this portion, these two plates being held against one another because the two portions are each immobilized axially relative to the corresponding element and the elements are immobilized axially relative to one anoher by means of the said cardan-type connection.

9. The arm as claimed in anyone of claims 1 to 8, wherein at least some of the connection elements are of a length increasing in the series.

10. The arm as claimed in anyone of claims 1 to 9, wherein elements are arranged in parallel series on a base (29), so as to form, for example, a gripping hand.

## Patentansprüche

1. Handhabungsarm, welcher eine Reihe von gelenkigen Elementen aufweist, wobei ein erstes und ein zweites Element (1, 2), die in der Reihe aufeinanderfolgen, eine Achse haben und miteinander durch Kupplungsmittel verbunden sind, die das Schwenken des ersten Elements um eine Schwenkachse ermöglichen, welche auf die Achse des ersten Elements und im gleichen Punkt schräg auf die Achse des zweiten Elements trifft, wobei das erste und das zweite Element jeweils einen starren Abschnitt (7a, 7b) einer Antriebswelle aufweisen, der sich im Innern und koaxial zum entsprechenden Element befindet, wobei diese Abschnitte durch eine Gelenkverbindung (13a) miteinander verbunden sind, sowie mit dem entsprechenden Element durch Betätigungsmittel verbunden sind, die ein gewünschtes Drehen und Festhalten eines Abschnitts bezüglich des entsprechenden Elements ermöglichen,
dadurch **gekennzeichnet**, daß das Element (1,2) zumindest teilweise wie ein Hohlkörper ausgebildet ist, und daß die oben genannten Betätigungsmittel einen Drehantrieb (6), dessen eine zylindrische Wand durch die Innenfläche des Elements gebildet ist und dessen andere zylindrische Wand durch die Außenfläche des Wellenabschnitts gebildet ist, sowie einen Verteiler (4) umfassen, welcher geeignet ist, eine Kammer des Drehantriebs mit der Druckmittelquelle oder einem Druckablaßmittel zu verbinden sowie diese Kammer (wieder) zu trennen.

2. Arm nach Anspruch 1, dadurch gekennzeichnet, daß der Verteiler (4) im Inneren des Elements (1, 2) untergebracht ist.

3. Arm nach Anspruch 1 oder 2, dadurch gekennzeichnet, daß der Verteiler (4) drehbar ist und benachbart zu einer der senkrecht zur Achse verlaufenden Wände des Drehantriebs ist und von einem Kleinmotor (5) bzw. einem Motor mit geringer Leistung gesteuert wird, der ein Elektromotor wie zum Beispiel ein Schrittmotor sein kann.

4. Arm nach einem der Ansprüche 1 bis 3, dadurch gekennzeichnet, daß die Wellenabschnitte (7a, 7b) der Elemente hohl sind und zur Verbindung der Drehantriebe mit der Druckmittelquelle und/oder einem Druckablaßmittel dienen.

5. Arm nach einem der Ansprüche 1 bis 4, dadurch gekennzeichnet, daß das Element zusätzlich mit einer mechanischen Bremse (19) ausgestattet ist, zum Beispiel mit einer Scheibenbremse, die das relative Feststellen des Wellenabschnitts (7a) und des Elements (1) sicherstellt, wenn die gewünchte Position erreicht ist.

6. Arm nach Anspruch 5, dadurch gekennzeichnet, daß die mechanische Bremse das Element und den Wellenabschnitt auch bei einem Druckabfall des Strömungsmittels und einem Abfall der elektrischen Spannung des Motors relativ zueinander feststellt.

7. Arm nach einem der Ansprüche 1 bis 6, dadurch gekennzeichnet, daß die Kupplungsmittel zwischen dem ersten Element (1) und dem zweiten Element (2) sowie die Gelenkverbindung zwischen den Abschnitten der Antriebswelle der entsprechenden Elemente insgesamt von einem Kardangelenk oder analogen (3, 13a, 13b), das die beliebige Ausrichrung jedes Elements gegenüber dem anderen erlaubt, jedoch die Drehung eines Elements um seine eigene Achse nicht gestattet, während das andere Element ruht, sowie durch eine Schwenkverbindung gebildet werden, die die beiden Abschnitte der Antriebswelle miteinander verbindet, wobei diese Verbindung eine einzige Schwenkachse aufweist, die schräg auf die Achsen der beiden Abschnitte trifft.

8. Arm nach Anspruch 7, dadurch gekennzeichnet, daß die Schwenkverbindung durch zwei Platten (8a, 8b) realisiert ist, die jeweils von einem Abschnitt (7) getragen werden und über eine schräg zur Achse dieses Abschnitts stehende Fläche (9) in Kontakt stehen, wobei diese beiden Platten in ihrer übereinanderliegenden Stellung dadurch gehalten werden, daß die beiden Abschnitte jeweils bezüglich des entsprechenden Elements axial festgestellt wurden und daß jedes Element gegenüber dem anderen durch das Kardangelenk axial festgestellt wurde.

9. Arm nach einem der Ansprüche 1 bis 8, dadurch gekennzeichnet, daß zumindest einige der Verbindungselemente der Baureihe eine zunehmende Länge aufweisen.

10. Arm nach einem der Ansprüche 1 bis 9, dadurch gekennzeichnet, daß Elemente auf einer Basis (29) in parallelen Reihen angeordnet sind, um beispielsweise einen Greifarm zu bilden.
